# EUROPÄISCHE PATENTSCHRIFT

(11) **EP 4 356 740 B1**
(45) Veröffentlichungstag und Bekanntmachung des Hinweises auf die Patenterteilung: **23.09.2026**
(21) Anmeldenummer: 23200718.7
(22) Anmeldetag: 29.09.2023
(51) Int. Cl.: A22C 11/02, B29C 48/18, A22C 13/00

(54) **KOEXTRUSIONSKOPF, NAHRUNGSMITTELMASCHINE UND VERFAHREN ZUM KOEXTRUDIEREN EINER LEBENSMITTELMASSE**
COEXTRUSION HEAD, FOOD MACHINE AND METHOD FOR COEXTRUSION OF A FOOD MASS
TÊTE DE COEXTRUSION, MACHINE ALIMENTAIRE ET PROCÉDÉ DE COEXTRUSION D'UNE MASSE ALIMENTAIRE

(30) Priorität: 29.09.2022 DE 102022125215
(43) Veröffentlichungstag der Anmeldung: 24.04.2024
(73) Patentinhaber: VEMAG Maschinenbau GmbH, 27283 Verden/Aller (DE)
(72) Erfinder: Langer, Sven, 27308 Kirchlinteln (DE); Grote, Olaf, 27324 Eystrup (DE)
(74) Vertreter: Eisenführ Speiser

(56) Entgegenhaltungen:
- EP-A1- 0 741 973
- EP-B1- 2 519 109
- EP-B1- 3 094 185
- US-A- 4 905 587
- US-A1- 2012 295 005

## Beschreibung

Die Erfindung bezieht sich auf einen Koextrusionskopf für eine Nahrungsmittelmaschine, insbesondere eine Koextrusionsmaschine, zum Koextrudieren einer Lebensmittelmasse und einer die Lebensmittelmasse umgebenden Hülle mit einem Innenrohr zur Führung der zu einem Strang zu formenden Lebensmittelmasse in einer Produktionsrichtung, wobei ein einlassseitiges Ende des Innenrohres mit einem Auslass der Füllmaschine verbindbar ist, einem das Innenrohr umgebenden Gehäuse, einer zwischen Innenrohr und Gehäuse ausgebildeten Aufnahmekammer zum Aufnehmen von Hüllmaterial für die den Strang umgebenden Hülle, und einer korrespondierend zum Innenrohr ausgebildeten Düsenöffnung zum Abgeben von Hüllmaterial aus der Aufnahmekammer. Des Weiteren bezieht sich die Erfindung auch auf eine Nahrungsmittelmaschine zum Herstellen eines Stranges aus einer Lebensmittelmasse sowie auf ein Verfahren zum Koextrudieren einer Lebensmittelmasse.

Vorrichtungen und Verfahren vorbezeichneter Gattung werden üblicherweise zum Herstellen von Wurststrängen verwendet. Insbesondere werden solche Vorrichtungen eingesetzt, um Wurststränge mit einem auf die Außenseite aufgebrachten Hüllmaterial vorzugsweise im Wesentlichen kontinuierlich herzustellen. Grundsätzlich können Koextrusionsmaschinen aber auch zum Koextrudieren verschiedenster Substanzen eingesetzt werden.

Die Lebensmittelmasse, insbesondere die Brätmasse, wird üblicherweise in einer ersten Förderpumpe bzw. in einem Fülltrichter einer ersten Füllmaschine bereitgehalten, die eine erste Förderpumpe umfasst, und mittels der ersten Förderpumpe zum Erzeugen eines kontinuierlichen Förderstromes der Lebensmittelmasse in Richtung eines Auslasses gefördert. Statt die Lebensmittelmasse in eine Hülle wie beispielsweise einen Kunstdarm oder Naturdarm zu geben, kann auf die Außenseite der Lebensmittelmasse auch ein zunächst fließfähiges Hüllmaterial aufgebracht werden, welches später aushärtet. Bei einer Brätmasse kann es sich um eine pflanzenbasierte, insbesondere vegane oder vegetarische Brätmasse, oder um eine tierische Brätmasse handeln. Das Hüllmaterial verleiht dem aus der Lebensmittelmasse erzeugten Strang eine erhöhte Festigkeit, wodurch ein ungewolltes Brechen des Stranges erschwert oder vermieden werden soll. Als Hüllmaterial zum Aufbringen auf die Oberfläche des erzeugten Stranges wird zum Beispiel Collagen oder Alginat verwendet. Collagen und Alginat sind zunächst gelförmige, fließfähige Hüllmaterialien, die sich nach dem Aufbringen auf die Strangoberfläche nach relativ kurzer Zeitdauer verfestigen und eine feste Hülle an dem Strang ausbilden. Das Hüllmaterial wird üblicherweise mittels einer zweiten Förderpumpe zum Erzeugen eines kontinuierlichen Förderstromes des Hüllmaterials in Richtung eines Auslasses der zweiten Förderpumpe gefördert. Auch die zweite Förderpumpe kann beispielsweise Teil einer zweiten Füllmaschine sein. Der Auslass der ersten Füllmaschine bzw. der ersten Förderpumpe und der Auslass der zweiten Füllmaschine bzw. der zweiten Förderpumpe sind dabei zumeist fluidleitend mit einem Koextrusionskopf verbunden.

Die EP 2 719 284 A1 zeigt einen solchen Koextrusionskopf. Ein einlassseitiges Ende einer Förderleitung wird dabei mit dem Auslass der ersten Füllmaschine verbunden und eine Einlassöffnung eines Gehäuses des Koextrusionskopfes wird mit dem Auslass der zweiten Füllmaschine zum Einlassen des Alginats verbunden. Die Förderleitung wird dabei in das Gehäuse eingeschraubt und ein Innenrohr der Förderleitung erstreckt sich zumindest abschnittsweise durch das Gehäuse. Zwischen einer inneren Wandung des Gehäuses und dem Innenrohr wird dabei eine Aufnahmekammer ausgebildet, in welcher die Einlassöffnung des Gehäuses mündet. Das Gehäuse weist ferner eine ein auslassseitiges Ende des Innenrohres umgebene Auslassöffnung auf, deren Durchmesser größer als der auslassseitige Durchmesser der Förderleitung ist. Durch den so ausgebildeten Spalt kann das in der Aufnahmekammer aufgenommene Hüllmaterial austreten und wird auf die durch die Förderleitung geförderte Lebensmittelmasse aufgebracht. Durch einen solchen Koextrusionskopf kann dabei nur jeweils ein Hüllmaterial zurzeit auf den Strang aus Lebensmittelmasse aufgebracht werden. Somit ist es nicht möglich Lebensmittelmassen mit zwei oder mehr unterschiedlichen Hüllmaterialien zu koextrudieren.

Ferner zeigen EP 3 094 185 B1 und EP 0 741 973 A1 einen Koextrusionskopf gemäß dem Oberbegriff von Anspruch 1 und EP 2 519 109 B1 zeigt einen Tripleextrusionskopf mit verschiedenen Aufnahmeabteilen.

An dieser Stelle setzt die Erfindung an, deren Aufgabe es ist, Die Erfindung löst die zugrundeliegende Aufgabe in einem ersten Aspekt durch einen Koextrusionskopf von Lebensmittelmassen mit zwei oder mehr unterschiedlichen Hüllmaterialien bereitzustellen.

Die Erfindung löst die zugrundeliegende Aufgabe in einem ersten Aspekt durch einen Koextrusionskopf nach Anspruch 1.

Die Erfindung schlägt vor, dass die Aufnahmekammer eine Mehrzahl von fluidleitend mit der Düsenöffnung verbundenen Aufnahmeabteilen umfasst, wobei jedem Aufnahmeabteil ein Gehäuseeinlass zum Einlassen von Hüllmaterial in das jeweilige Aufnahmeabteil zugeordnet ist. Durch die Unterteilung der Aufnahmekammer in eine Mehrzahl von Aufnahmeabteilen mit entsprechenden Einlassöffnungen können verschiedene Füllmaterialien im Koextrusionskopf aufgenommen werden. Durch die fluidleitende Verbindung dieser Aufnahmeabteile mit der Düsenöffnung können dabei die zwei oder mehr verschiedene Hüllmaterialien durch die Düsenöffnung geführt und auf die zu einem Strang geformte Lebensmittelmasse aufgebracht werden. Es soll dabei verstanden werden, dass die Aufnahmeabteile dazu ausgebildet sind, das jeweilige Hüllmaterial derart isoliert von den übrigen Aufnahmeabteilen aufzunehmen, dass sich die Hüllmaterialien nicht untereinander innerhalb der Aufnahmekammer vermischen. Es soll hierbei verstanden werden, dass ein Vermischen der Hüllmaterialien nach dem Austritt aus der Aufnahmekammer durchaus gewünscht sein kann.

Vorzugsweise ist die Düsenöffnung derart korrespondierend zum Innenrohr ausgebildet, dass in einer Ebene orthogonal zur Produktrichtung ein Spalt zwischen Düsenöffnung und Innenrohr zur Durchführung von Hüllmaterial ausgebildet ist, wobei die Mehrzahl von Aufnahmeabteilen fluidleitend mit dem Spalt verbunden ist. Durch die fluidleitende Verbindung der Aufnahmeabteile mit dem Spalt kann das Hüllmaterial aus dem jeweiligen Aufnahmeabteil direkt zum Spalt geführt werden und durch diesen austreten, um auf die zu einem Strang geformte Lebensmittelmasse aufgebracht zu werden.

Weiter umfasst der Koextrusionskopf ferner eine zu der Mehrzahl von Aufnahmeabteilen korrespondierende Anzahl von Fluidpassagen, wobei jedem Aufnahmeabteil eine oder mehrere Fluidpassagen aus der Anzahl von Fluidpassagen zugeordnet sind. Die Fluidpassagen sind dazu ausgebildet, Hüllmaterial aus dem jeweiligen Aufnahmeabteil zum Spalt zu führen. Somit kann durch Fluidpassagen, welche bevorzugt an die Geometrie des Koextrusionskopfes im Bereich des Spalts angepasst sind, Hüllmaterial direkt zum Spalt geführt werden. Dabei kann insbesondere durch geeignete Führung der Fluidpassagen der nur begrenzte Bauraum im Bereich der Düsenöffnung berücksichtigt werden. Derartige Fluidpassagen können beispielsweise durch Schläuche oder andere flexible Leitungen ausgebildet sein. Alternativ kann es sich bei den Fluidpassagen auch um bloße Öffnungen in einer Wandung des Aufnahmeabteils handeln, welche im Spalt münden. Die Fluidpassagen weisen im Bereich des Spalts - also beispielsweise innerhalb oder benachbart zu der Düsenöffnung - einen Strömungsquerschnitt auf, durch welchen das Hüllmaterial austritt. Die Breite des Strömungsquerschnitts bestimmt dabei - aber nicht ausschließlich - die Breite eines durch das jeweilige Hüllmaterial innerhalb der Fluidpassage gebildeten Hüllenabschnitts.

Gemäß einer bevorzugten Ausführungsform umfasst der Koextrusionskopf ferner einen in der Aufnahmekammer eingeordneten Einsatz, der dazu ausgebildet ist, zur Ausbildung der Mehrzahl von Aufnahmeabteilen und/oder Fluidpassagen mit dem Gehäuse und/oder dem Innenrohr zusammenzuwirken. Ein solcher Einsatz ist in einfacher Weise zur Unterteilung einer Aufnahmekammer innerhalb eines Gehäuses geeignet und kann beispielsweise durch eine verschließbare Öffnung in die Aufnahmekammer eingebracht werden. Durch das Zusammenwirken mit dem Gehäuse und/oder dem Innenrohr wird der Einsatz in der Aufnahmekammer angeordnet, wobei zwischen dem Gehäuse und dem Einsatz bzw. dem Innenrohr und dem Einsatz einzelne Räume eingeschlossen werden, welche die Aufnahmeabteile ausbilden. Somit kann ein herkömmlicher Koextrusionskopf mit lediglich einer Aufnahmekammer genutzt werden und durch das Einsetzen des Einsatzes derart modifiziert werden, dass zwei oder mehr Hüllmaterialien auf das zu einem Strang geformte Lebensmittel aufgetragen werden können. Das Gehäuse des Koextrusionskopfes kann somit kostengünstig hergestellt werden und der Einsatz als separates Bauteil durch eine Vielzahl von Fertigungsverfahren hergestellt werden, so beispielsweise durch Gießen oder spanabhebende Verfahren. Ferner können mit einem solchen Koextrusionskopf bedarfsweise entweder nur ein Hüllmaterial oder eine Mehrzahl von Hüllmaterialien koextrudiert werden.

Vorzugsweise sind die Anzahl von Fluidpassagen innerhalb der Aufnahmekammer fluiddicht voneinander getrennt und münden im Bereich der Düsenöffnung, insbesondere im Spalt benachbart zueinander. Durch das benachbarte Münden der Fluidpassagen im Bereich der Düsenöffnung bzw. direkt im Spalt treten die verschiedenen Hüllmaterialien folglich auch benachbart zueinander aus dem Koextrusionskopf aus. Somit wird ein Vermischen der Hüllmaterialien innerhalb der Aufnahmekammer ausgeschlossen und zugleich ein vollständiges Bedecken der zu einem Strang geformten Lebensmittelmasse mit den Hüllmaterialien gewährleistet. Nach dem Austreten des Hüllmaterials aus dem Koextrusionskopf ist dabei ein Vermischen abhängig von dem gewünschten Produkt durchaus gewollt. Ein Vermischen in den Randbereichen des Hüllmaterials kann dabei beispielsweise bereits im Spalt erfolgen. Üblicherweise wird das aus dem Koextrusionskopf austretende Hüllmaterial unmittelbar von einer Verfestigungseinrichtung, welche dem Koextrusionskopf nachgeschaltet ist, verfestigt. Das erst im Bereich der Düsenöffnung benachbart zueinander aus den jeweiligen Fluidpassagen austretende Hüllmaterial wird somit bereits vor einem Vermischen der Fließkanten der verschiedenen Hüllmaterialien zumindest teilweise verfestigt.

Vorzugsweise umfasst der Koextrusionskopf ferner eine Anzahl von Dichtungen, wobei jeweils mindestens eine Dichtung zwischen zwei benachbarten Aufnahmeabteilen angeordnet ist und zum fluiddichten Trennen der zwei benachbarten Aufnahmeabteile ausgebildet ist. Somit wird auch bei hohen Fülldrücken ein Vermischen der Hüllmaterialien ausgeschlossen und beispielsweise bei Nutzung eines Einsatzes zum Ausbilden der Aufnahmeabteile eine Verschmutzung von Kontaktflächen zwischen Einsatz und Gehäuse bzw. Einsatz und Innenrohr reduziert oder sogar vollständig vermieden. Eine solche Dichtung kann beispielsweise als Dichtungsring ausgebildet sein, welcher in einer Nut des Einsatzes und/oder des Gehäuses und/oder des Innenrohres aufgenommen ist.

Vorzugsweise sind die Aufnahmeabteile symmetrisch zur Produktionsrichtung ausgebildet. Somit wird eine gleichmäßige Gewichtsverteilung realisiert.

Weiter bevorzugt weist der Spalt einen in Produktionsrichtung variierenden Spaltabstand auf, die am distalen auslassseitigen Ende des Innenrohres ein Minimum annimmt. Somit wird das Einführen des Hüllmaterials durch die zunächst größere Spaltdicke vereinfacht und es kann anschließend am distalen auslassseitigen Ende des Innenrohres durch eine minimale Spaltdicke ein dünner Materialauftrag von vorzugsweise weniger als 1 mm realisiert werden kann.

Gemäß einer bevorzugten Ausführungsform weist der Koextrusionskopf ferner einen Düsenaufsatz auf, der mit dem Gehäuse, insbesondere dem distalen Ende des Gehäuses verbunden ist und welcher die Düsenöffnung aufweist. Weiter bevorzugt ist die Düsenöffnung in Produktionsrichtung trichterförmig ausgebildet. Somit wird zugleich die Öffnung bereitgestellt, durch welche beispielsweise der Einsatz in das Gehäuse eingebracht werden kann. Diese Öffnung wird dann durch den Düsenaufsatz verschlossen. Eine trichterförmige Ausbildung der Düsenöffnung ermöglicht ferner ein einfaches Einführen des Innenrohres in die Düsenöffnung derart, dass der Spalt ausgebildet wird, ohne dass es bei der Montage zu einer Beschädigung des Innenrohres kommt. Weiterhin fördert die trichterförmige Ausbildung der Düsenöffnung - also deren Verengung in Produktionsrichtung - das Fließen des Hüllmaterials in Richtung des Spalts.

Vorzugsweise ist der Düsenaufsatz mit dem Gehäuse durch eine lösbare form- und/oder kraftschlüssige Verbindung verbunden. Insbesondere ist der Düsenaufsatz mit dem Gehäuse dabei durch eine Clamp-Verbindung, eine Bajonett-Verbindung oder eine Schraubverbindung verbunden. Die Verwendung einer Clamp-Verbindung, also einer Klemmverbindung oder einer Schnappverbindung sowie einer Bajonett-Verbindung oder auch einer Schraubverbindung ermöglicht eine wiederholbare lösbare Verbindung zwischen Düsenaufsatz und Gehäuse. Die Verwendung beispielsweise einer Schraubverbindung oder Bajonett-Verbindung ist dabei auf eine zylindrische Ausbildung des Innenrohres beschränkt, sodass eine Drehbewegung des Düsenaufsatzes mit der Düsenöffnung relativ zum Innenrohr ermöglicht ist.

Gemäß einer bevorzugten Ausführungsform schließt das Gehäuse in Produktionsrichtung mit dem auslassseitigen Ende des Innenrohres ab. Besonders bevorzugt steht zumindest ein Teil des Gehäuses in Produktionsrichtung gegenüber dem distalen Ende des Innenrohres vor. Somit wird das Innenrohr vollständig durch das Gehäuse gegenüber quer zur Produktionsrichtung wirkenden Kräften geschützt. Darüber hinaus schützt das Gehäuse das Innenrohr auch gegenüber Stürzen, bei welchen Kräfte entgegen der Produktionsrichtung auf den Koextrusionskopf wirken.

Besonders bevorzugt weist der Düsenaufsatz eine Mündungsfläche auf, welche die Düsenöffnung umgibt und die insbesondere in Produktionsrichtung zurückgesetzt ist. Weiter bevorzugt steht das distale auslassseitige Ende des Innenrohres gegenüber der Mündungsfläche in Produktionsrichtung vor. Die aus dem Innenrohr austretende Lebensmittelmasse expandiert gegebenenfalls zunächst in einer Richtung quer zur Produktionsrichtung. Dies tritt insbesondere bei tierischen Brätmassen oder anderen tierischen Lebensmittelmassen auf. Die Lebensmittelmasse geht also auf. Durch das Vorstehen des Innenrohres in Produktionsrichtung behindert die expandierende Lebensmittelmasse nicht das Ausbringen des Hüllmaterials, insbesondere durch den um das Innenrohr herum gebildeten Spalt. Das Hüllmaterial kann somit entlang der Außenseite des Innenrohres aus der Aufnahmekammer herausfließen und trifft erst dort auf die expandierende Lebensmittelmasse. Durch das Expandieren zieht die Lebensmittelmasse die verschiedenen Hüllmaterialien in Expansionsrichtung mit nach außen und in Produktionsrichtung nach vorne, sodass sich eine gleichmäßige Hülle auf der Lebensmittelmasse bildet. Durch die Mündungsfläche, welche in Produktionsrichtung zurückgesetzt gegenüber dem übrigen Teil des Düsenaufsatzes ist, wird das Innenrohr in montierten Zustand auch im vorstehenden Bereich zuverlässig geschützt.

Weiter bevorzugt weist die Aufnahmekammer eine Entlüftungsöffnung auf, die zum Entlüften der Aufnahmekammer beim Einfüllen von Hüllmaterial ausgebildet ist. Das durch den jeweiligen Gehäuseeinlass einströmende Hüllmaterial verdrängt langsam die in der Aufnahmekammer bzw. den Aufnahmeabteilen befindliche Luft, welche durch die Entlüftungsöffnung entweichen kann. Somit wird ein gleichmäßiges Aufbringen des Hüllmaterials ohne eventuelle Lufteinschlüsse gewährleistet. Besonders bevorzugt ist dabei zumindest einem der Aufnahmeabteile eine bzw. die Entlüftungsöffnung zugeordnet, wobei die Entlüftungsöffnung im montierten Zustand des Koextrusionskopfes, insbesondere in vertikaler Richtung, gegenüberliegend des Gehäuseeinlasses des Aufnahmeabteils angeordnet ist. Das durch den Einlass bzw. die Einlässe einströmende Hüllmaterial steigt somit langsam in dem jeweiligen Aufnahmeabteil auf und verdrängt die darin befindliche Luft, welche durch die gegenüberliegend des Einlasses angeordnete Entlüftungsöffnung entweichen kann.

Die Erfindung betrifft in einem zweiten Aspekt eine Nahrungsmittelmaschine, insbesondere eine Koextrusionsmaschine zum Herstellen eines Stranges aus einer Lebensmittelmasse. Die Nahrungsmittelmaschine umfasst eine erste Förderpumpe zum Fördern der Lebensmittelmasse und einen ersten Auslass zum Abgeben der geförderten Lebensmittelmasse. Weiterhin umfasst die Nahrungsmittelmaschine eine zweite Förderpumpe zum Fördern eines ersten Hüllmaterials und einem zweiten Auslass zum Abgeben des ersten Hüllmaterials. Ferner umfasst die Nahrungsmittelmaschine auch mindestens eine dritte Förderpumpe zum Fördern des zweiten Hüllmaterials und einen dritten Auslass zum Abgeben des zweiten Hüllmaterials. Die Erfindung löst die eingangs genannte Aufgabe gemäß dem zweiten Aspekt dadurch, dass die Nahrungsmittelmaschine ferner einen mit dem ersten Auslass, dem zweiten Auslass und dem dritten Auslass verbundenen Koextrusionskopf aufweist, der gemäß dem ersten Aspekt der Erfindung ausgebildet ist. Durch einen solchen Koextrusionskopf macht sich die Nahrungsmittelmaschine die eingangs in Bezug auf den ersten Aspekt der Erfindung beschriebenen Vorteile zu eigen. In Bezug auf den ersten Aspekt der Erfindung beschriebene Vorteile und bevorzugte Ausführungsformen sind folglich ebenso Vorteile und bevorzugte Ausführungsformen der Nahrungsmittelmaschine gemäß dem zweiten Aspekt der Erfindung. Bevorzugt weist eine erste Füllmaschine den ersten Auslass und die erste Förderpumpe auf und umfasst ferner einen ersten Fülltrichter zum Aufnehmen der Lebensmittelmasse. Die zweite Förderpumpe und die dritte Förderpumpe kooperieren bevorzugt mit der ersten Füllmaschine. Insbesondere zum Aufnehmen und Fördern von Lebensmittelmassen, wie einer Brätmasse, ermöglicht eine Füllmaschine eine einfache Verarbeitung. Gemäß einer alternativen bevorzugten Ausführungsform weist eine zweite Füllmaschine den zweiten Auslass und die zweite Förderpumpe auf und umfasst ferner einen zweiten Fülltrichter zum Aufnehmen des ersten Hüllmaterials. Bevorzugt weist eine dritte Füllmaschine den dritten Auslass und die dritte Förderpumpe auf und umfasst ferner einen dritten Fülltrichter zum Aufnehmen des zweiten Hüllmaterials. Durch insgesamt mindestens drei Füllmaschinen, welche die jeweiligen Förderpumpen aufweisen, wird eine effiziente und gut automatisierbare Verarbeitung ermöglicht. Die Nahrungsmittelmaschine umfasst bevorzugt eine Anzahl weiterer Füllmaschinen bzw. Förderpumpen, welche zum Bereitstellen von zusätzlichen Hüllmaterialien eingerichtet und mit dem Koextrusionskopf fluidleitend verbunden sind. In der Aufnahmekammer ist dabei eine entsprechende Anzahl von Aufnahmeabteilen vorgesehen.

Gemäß einer bevorzugten Ausführungsform umfasst die Nahrungsmittelmaschine ferner mindestens eine Verfestigungseinrichtung zum Verfestigen des auf den Strang aufgebrachten Hüllmaterials aus der Mehrzahl der Aufnahmeabteile. Eine solche Verfestigungseinrichtung ermöglicht ein beschleunigtes Verfestigen des Hüllmaterials und somit eine kürzere Verfestigungsstrecke.

Weiter bevorzugt umfasst die Nahrungsmittelmaschine ferner eine Steuereinrichtung, die signalleitend mit der zweiten Förderpumpe und der dritten Förderpumpe und vorzugsweise auch der ersten Förderpumpe und/oder der Verfestigungseinrichtung verbunden ist. Die Steuereinrichtung ist dabei bevorzugt zum Einstellen der Abgabe des Hüllmaterials durch die Düsenöffnung dazu ausgebildet, zumindest eine Förderleistung der zweiten Förderpumpe und der dritten Förderpumpe zu steuern. Durch das Steuern der Förderleistung der zweiten Förderpumpe und der dritten Förderpumpe wird der Volumenstrom des geförderten Hüllmaterials gesteuert. So kann durch einen höheren Volumenstrom, welcher aus der Düsenöffnung austritt, ein größerer Hüllenabschnitt durch das jeweilige Hüllmaterial gebildet werden. Somit kann unabhängig von dem konkreten Strömungsquerschnitt durch welchen das Hüllmaterial austritt, die Breite des durch das Hüllmaterial gebildeten Hüllenabschnitts in einem beschränkten Bereich eingestellt werden. Somit ist die Breite des Hüllenabschnitts nicht länger allein durch den Strömungsquerschnitt durch welchen das Hüllmaterial austritt vorgegeben. Die exakten Abmaße des Hüllenabschnitts hängen dabei ferner auch von der Viskosität des Hüllmaterials ab, welche bei der Steuerung der Förderleistung der jeweiligen Förderpumpe zu berücksichtigen ist.

Die Erfindung löst die eingangs genannte Aufgabe in einem dritten Aspekt durch ein Verfahren gemäß Anspruch 11 zum Koextrudieren einer Lebensmittelmasse und einer die Lebensmittelmasse umgebenden Hülle aus einer Mehrzahl von Hüllmaterialien mit den Schritten:
- Führen der zu einem Strang zu formenden Lebensmittelmasse in einer Produktionsrichtung durch ein Innenrohr,
- Einfüllen von zwei oder mehr verschiedenen Hüllmaterialien in eine Mehrzahl von Aufnahmeabteilen einer zwischen dem Innenrohr und einem Gehäuse ausgebildeten Aufnahmekammer,
- Führen von Hüllmaterial aus den Aufnahmeabteilen zu einer Düsenöffnung, durch eine Anzahl von Fluidpassagen, von denen jedem Aufnahmeabteil eine oder mehrere Fluidpassagen zugeordnet sind, wobei die Fluidpassagen innerhalb der Aufnahmekammer fluiddicht voneinander getrennt sind und im Bereich der Düsenöffnung benachbart zueinander münden,
- Ausstoßen eines Strangs der Lebensmittelmasse durch ein distales Ende des Innenrohres, und
- Abgeben von Hüllmaterial aus den Aufnahmeabteilen der Aufnahmekammer durch die Düsenöffnung, derart, dass das Hüllmaterial aus jedem der Aufnahmeabteile jeweils in einem separaten, vordefinierten Bereich, der durch einen Strömungsquerschnitt der Fluidpassagen innerhalb der Düsenöffnung (32) gebildet wird,
aus der Düsenöffnung austritt und einen definierten Hüllenabschnitt ausgebildet, wobei eine Breite, mit der das Hüllmaterial auf die Lebensmittelmasse aufgebracht wird, durch eine Breite des jeweiligen Strömungsquerschnitts definiert ist, wodurch eine Breite des durch das Hüllmaterial gebildeten Hüllenabschnitts bestimmt ist.

Durch das Einfüllen von verschiedenen Hüllmaterialien in die Mehrzahl von Aufnahmeabteilen und das Abgeben des Hüllmaterials entsprechend aus diesen Aufnahmeabteilen zum Ausbilden einer Hülle macht sich das erfindungsgemäße Verfahren die eingangs in Bezug auf den ersten Aspekt der Erfindung beschriebenen Vorteile zu eigen. Bevorzugte Ausführungsformen und Vorteile des ersten und zweiten Aspekts der Erfindung sind somit ebenso bevorzugte Ausführungsformen und Vorteile des dritten Aspekts der Erfindung.

Vorzugsweise umfasst das Verfahren ferner das Steuern einer Förderleistung der zweiten Förderpumpe und/oder der dritten Förderpumpe zum Einstellen der Abgabe eines ersten Hüllmaterials und/oder eines zweiten Hüllmaterials durch die Düsenöffnung, derart, dass ein durch das jeweilige Hüllmaterial gebildeter Hüllenabschnitt einstellbar ist. Durch das Steuern der Förderleistung der zweiten Förderpumpe und der dritten Förderpumpe wird der Volumenstrom des geförderten Hüllmaterials gesteuert. So kann durch einen höheren Volumenstrom in einem definierten Maß ein größerer Hüllenabschnitt durch das jeweilige Hüllmaterial gebildet werden. Es kann also unabhängig von dem konkreten Strömungsquerschnitt durch welchen das Hüllmaterial austritt, die Breite des durch das Hüllmaterial gebildeten Hüllenabschnitts in einem beschränkten Bereich eingestellt werden. Somit ist die Breite des Hüllenabschnitts nicht länger allein durch den Strömungsquerschnitt durch welchen das Hüllmaterial austritt vorgegeben. Die Breite des Hüllenabschnitts quer zur Produktionsrichtung kann somit beispielsweise die Breite der jeweiligen Fluidpassage - bzw. des Strömungsquerschnitts der Fluidpassage durch welchen das Hüllmaterial austritt - übersteigen. Die exakte Größe des Hüllenabschnitts hängt dabei ferner auch von der Viskosität des Hüllmaterials ab, welche bei der Steuerung der Förderleistung der jeweiligen Förderpumpe zu berücksichtigen ist.

Besonders bevorzugt umfasst das Steuern der Förderleistung der zweiten Förderpumpe zum Einstellen der Abgabe des ersten Hüllmaterials durch die Düsenöffnung ferner das automatische Anpassen der Förderleistung der dritten Förderpumpe durch die Steuereinrichtung. Somit ist stets sichergestellt, dass ein ausreichender Volumenstrom des ersten Hüllmaterials und des zweiten Hüllmaterials sowie gegebenenfalls weiterer Hüllmaterialien bereitgestellt wird, um die zu einem Strang geformte Lebensmittelmasse vollständig zu umhüllen.

Die Erfindung wird nachfolgend unter Bezugnahme auf die beigefügten Figuren anhand bevorzugter Ausführungsbeispiele beschrieben. Hierbei zeigen:
- Fig. 1:: eine schematische Ansicht einer Nahrungsmittelmaschine zum Herstellen eines Stranges aus einer Lebensmittelmasse mit einem erfindungsgemäßen Koextrusionskopf sowie einer Weiterverarbeitungseinrichtung;
- Fig. 2:: eine perspektivische Ansicht eines Koextrusionskopfes gemäß einer bevorzugten Ausführungsform;
- Fig. 3a:: eine erste geschnittene Seitenansicht des Koextrusionskopfes in einer ersten Winkelposition gemäß Fig. 2;
- Fig. 3b:: eine zweite geschnittene Seitenansicht des Koextrusionskopfes in einer zweiten Winkelposition gemäß Fig. 2;
- Fig. 4:: eine geschnittene Frontansicht des Koextrusionskopfes gemäß Fig. 2;
- Fig. 5:: eine Frontansicht des Koextrusionskopfes gemäß Figur 2;
- Fig. 6: ein mittels der Nahrungsmittelmaschine gemäß Fig. 1 hergestelltes Lebensmittelprodukt schematisch in einer Schnittansicht; und
- Fig. 7:: ein Flussdiagramm zur Illustrierung eines Koextrusionsverfahrens.

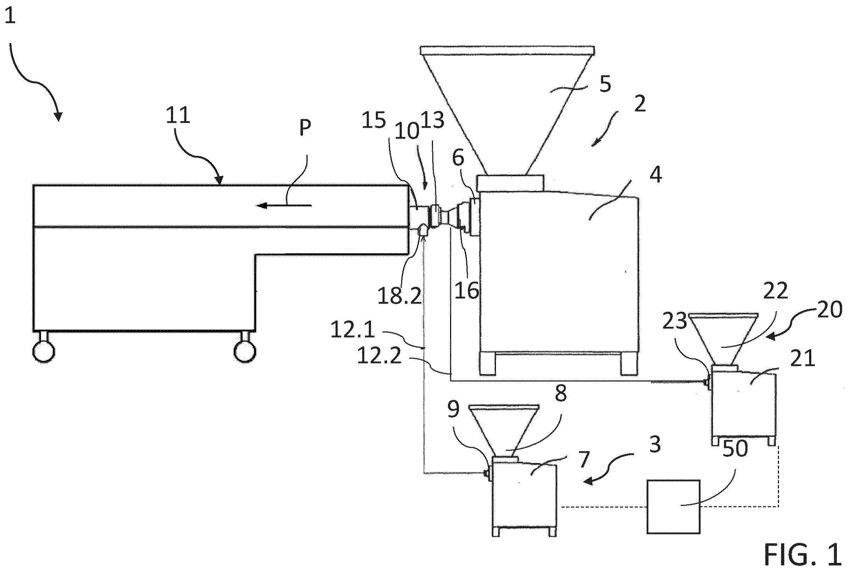

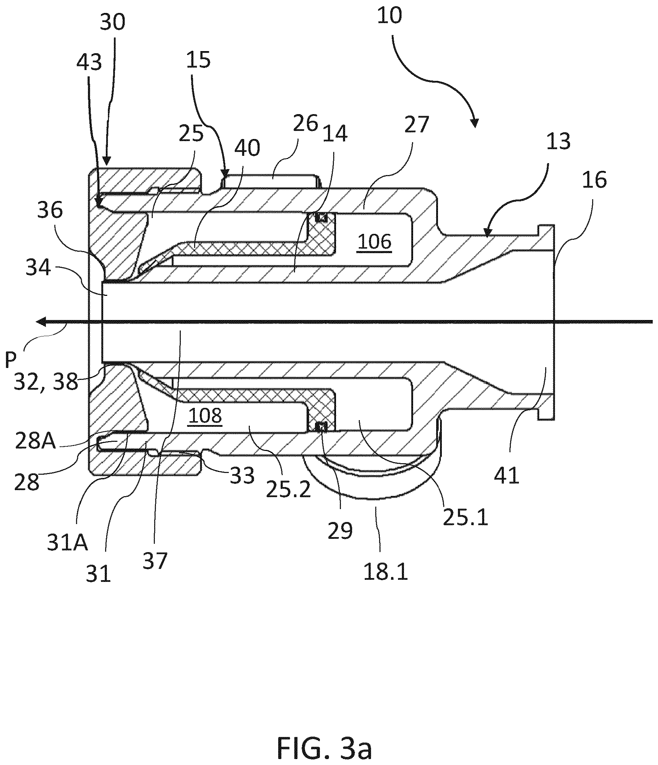

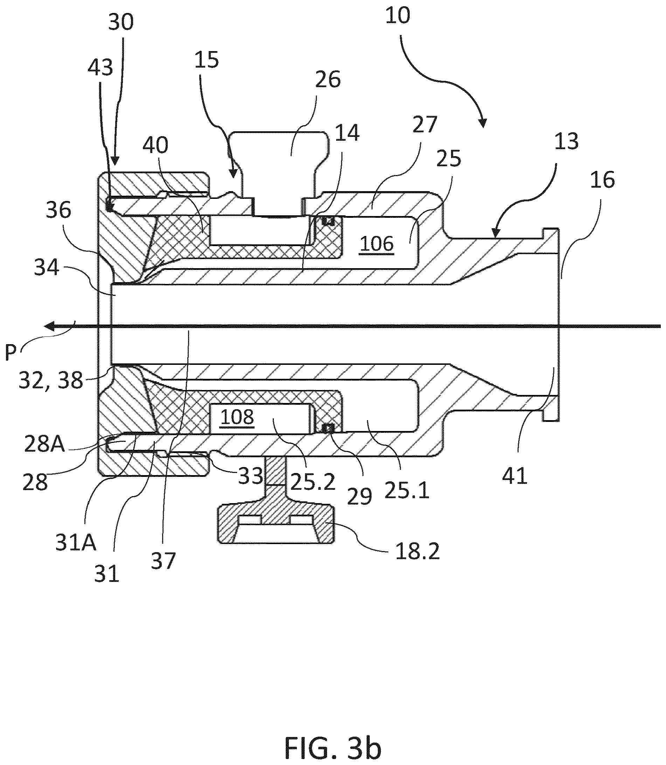

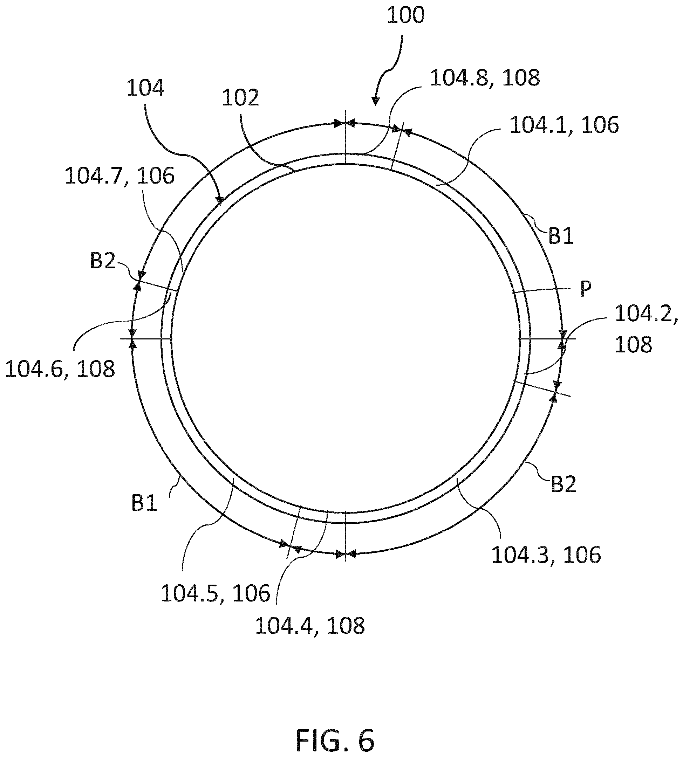

Fig. 1 zeigt eine Nahrungsmittelmaschine 1 zum Herstellen eines Stranges aus einer Lebensmittelmasse 102 (vgl. Fig. 6) wie einer Brätmasse oder dergleichen, welche mit einer Hülle 104 (vgl. Fig. 6) aus verschiedenen Hüllmaterialien 106, 108 (vgl. Fig. 3a und 3b) umhüllt wird.

Die Nahrungsmittelmaschine 1 ist vorliegend eine Koextrusionsmaschine. In der gezeigten Ausführungsform ist eine erste Förderpumpe 4, deren Position in der gezeigten Ansicht lediglich angedeutet sein soll, Teil einer erste Füllmaschine 2 der Nahrungsmittelmaschine 1. Die erste Füllmaschine 2 weist ferner einen ersten Fülltrichter 5 auf. Ferner ist eine zweite Förderpumpe 7, deren Position ebenfalls lediglich angedeutet ist, Teil einer zweiten Füllmaschine 3. Weiterhin umfasst die zweite Füllmaschine 3 einen zweiten Fülltrichter 8.

Die Nahrungsmittelmaschine 1 umfasst ferner eine dritte Füllmaschine 20 mit einem dritten Fülltrichter 22 und einer dritten Förderpumpe 21, deren Position ebenfalls lediglich angedeutet ist. Die erste Füllmaschine 2 weist einen ersten Auslass 6 auf, die zweite Füllmaschine 3 weist einen zweiten Auslass 9 auf und die dritte Füllmaschine 3 weist einen dritten Auslass 23 auf.

Die Nahrungsmittelmaschine 1 weist zudem einen Koextrusionskopf 10 auf, welcher an den ersten Auslass 6 angeschlossen ist und über eine erste Leitung 12.1 ferner auch mit dem zweiten Auslass 9 und über eine zweite Leitung 12.2 mit dem dritten Auslass 23 verbunden ist. Abhängig von der räumlichen Anordnung der ersten, zweiten und dritten Füllmaschine 2, 3, 20 kann zum Anschluss der ersten Füllmaschine 2 auch eine Leitung beliebiger Länge verwendet werden.

In einer Produktionsrichtung P nachgeschaltet von dem Koextrusionskopf 10 ist eine Weiterbehandlungseinrichtung 11 angeordnet, welche vorliegend eine Verfestigungseinrichtung 11 ist. Die Verfestigungseinrichtung 11 ist dazu ausgebildet, die auf den Strang aus Lebensmittelmasse 102 (vgl. Fig. 6) aufgebrachten Hüllmaterialien 106, 108 (vgl. Fig. 3a und 3b) zu verfestigen. Die Verfestigungseinrichtung 11 weist dafür bevorzugt einen oder mehrere Sprühköpfe (nicht gezeigt) zum Ausbringen eines Verfestigungsmaterials wie beispielsweise Kalziumkarbonat auf. Ferner können beliebige andere Weiterverarbeitungseinrichtungen, wie insbesondere Abteil- oder Abdreheinrichtungen in Produktionsrichtung P der Verfestigungseinrichtung 11 nachgeschaltet oder vorgeschaltet sein.

Der Koextrusionskopf 10 weist einen Förderleitungsabschnitt 13 und ein Gehäuse 15 auf. Der Förderleitungsabschnitt 13 ist mit dem Auslass 6 der ersten Füllmaschine 2 über ein einlassseitiges Ende 16 verbunden. Das Gehäuse 15 weist ferner einen ersten Gehäuseeinlass 18.1 und einen zweiten Gehäuseeinlass 18.2 auf, welche über die Leitungen 12.1, 12.2 mit dem zweiten Auslass 9 sowie dem dritten Auslass 23 verbunden sind. Die Lebensmittelmasse 102 (vgl. Fig. 6) aus der ersten Füllmaschine 2 wird in Produktionsrichtung P durch den Koextrusionskopf 10 gefördert und austrittsseitig mit einem ersten Hüllmaterial 106 (vgl. Fig. 3a und 3b) aus der zweiten Füllmaschine 3 und einem zweiten Hüllmaterial 108 (vgl. Fig. 3a und 3b) der dritten Füllmaschine 20 umhüllt (vgl. Fig. 6).

Die Nahrungsmittelmaschine 1 weist ferner bevorzugt eine Steuereinrichtung 50 auf, die signalleitend mindestens mit der zweiten Füllmaschine 3 und der dritten Füllmaschine 20 verbunden ist. Die Steuereinrichtung 50 ist zum Einstellen der Abgabe des ersten und zweiten Hüllmaterials 106, 108 (vgl. Fig. 3a und 3b) durch die Düsenöffnung 32 ausgebildet und steuert zu diesem Zweck eine Förderleistung der zweiten Förderpumpe 7 bzw. der dritten Förderpumpe 21. Die Steuereinrichtung 50 kann bevorzugt auch mit der ersten Füllmaschine 2 verbunden sein (nicht gezeigt) und weiter bevorzugt zum Steuern der ersten Füllmaschine 2 eingerichtet sein. Die Steuereinrichtung 50 kann bevorzugt auch zum Durchführen weiterer Steueroperationen eingerichtet sein und besonders bevorzugt in eine der Füllmaschinen 2, 3, 20, besonders bevorzugt in das Gehäuse der ersten Füllmaschine 2 integriert sein. Alternativ kann die Steuereinrichtung 50 auch als separate Steuereinrichtung vorgesehen sein.

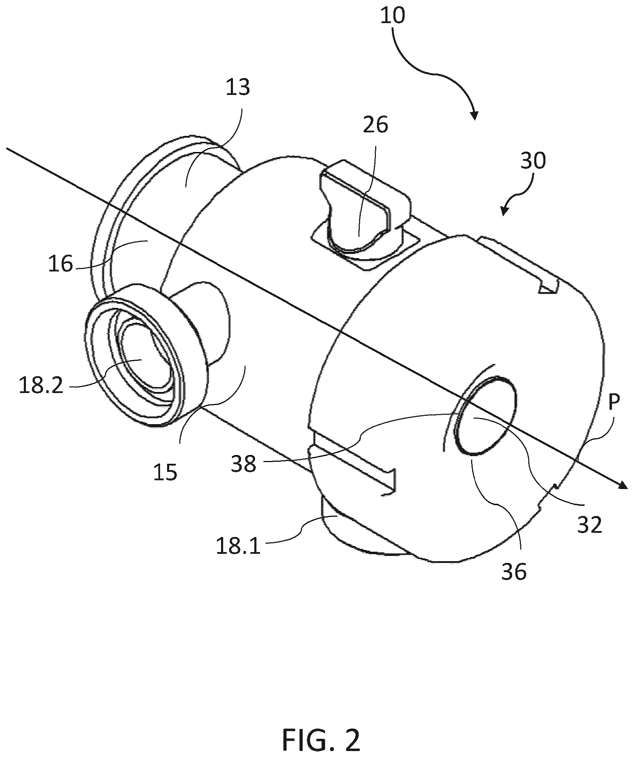

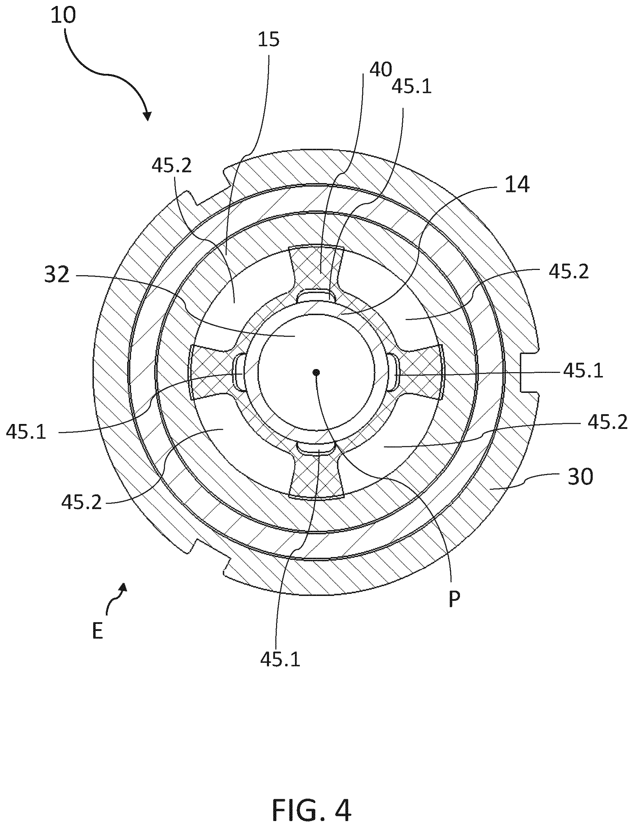

Der Koextrusionskopf 10 ist im Detail in den Fig. 2 bis 5 gezeigt. Der Koextrusionskopf 10 weist, wie bereits in Bezug auf Fig. 1 beschrieben, den Förderleitungsabschnitt 13 und das Gehäuse 15 auf. Der Förderleitungsabschnitt 13 und das Gehäuse 15 sind dabei beispielsweise integral ausgebildet.

Wie insbesondere Fig. 3a und 3b zeigen, weist der Förderleitungsabschnitt 13 ein Innenrohr 14 auf, wobei zwischen dem Innenrohr 14 und einer inneren Wandung 27 des Gehäuses 15 eine Aufnahmekammer 25 ausgebildet ist.

Das Gehäuse 15 weist neben der Gehäuseeinlässe 18.1, 18.2 zum Einlassen von Hüllmaterial 106, 108 in die Aufnahmekammer 25 auch eine Entlüftungsöffnung 26 auf. Bevorzugt ist die Entlüftungsöffnung 26 im montierten Zustand des Koextrusionskopfes gegenüberliegend eines oder beider Gehäuseeinlässe 18.1, 18.2 angeordnet. Die durch die Gehäuseeinlässe 18.1, 18.2 eingelassenen Hüllmaterialien 106, 108 steigen somit zunächst in der Aufnahmekammer 25 auf und verdrängen die darin befindliche Luft, welche über die Entlüftungsöffnung 26 entweichen kann.

Der Koextrusionskopf 10 umfasst ferner einen Düsenaufsatz 30 mit einer Düsenöffnung 32 zum Auslassen des ersten und zweiten Hüllmaterials 106, 108. Der Düsenaufsatz 30 ist mit einem distalen Ende 28 des Gehäuses 15 verbunden. Der Düsenaufsatz 30 weist eine korrespondierend zum distalen Ende 28 des Gehäuses 15 ausgebildete Aufnahmeöffnung 31 auf.

Die Aufnahmekammer 25 weist ein erstes fluidleitend mit der Düsenöffnung 32 verbundenes Aufnahmeabteil 25.1 und ein zweites fluidleitend mit der Düsenöffnung 32 verbundenes Aufnahmeabteil 25.2 auf. Dem ersten Aufnahmeabteil 25.1 ist der erste Gehäuseeinlass 18.1 zum Einlasen des ersten Hüllmaterials 106 in das erste Aufnahmeabteil 25.1 zugeordnet. Dem zweiten Aufnahmeabteil 25.2 ist der zweite Gehäuseeinlass 18.2 zum Einlassen des zweiten Hüllmaterials 108 in das zweite Aufnahmeabteil 25.2 zugeordnet. Das erste Hüllmaterial 106 im ersten Aufnahmeabteil 25.1 unterscheidet sich dabei von dem zweiten Hüllmaterial 108 im zweiten Aufnahmeabteil 25.2.

Das erste Aufnahmeabteil 25.1 weist eine Anzahl erster Fluidpassage 45.1 auf. Ferner weist auch das zweite Aufnahmeabteil 25.2 eine Anzahl zweiter Fluidpassagen 45.2 auf. Die ersten Fluidpassage 45.1 sind dazu ausgebildet, das erste Hüllmaterial 106 aus dem ersten Aufnahmeabteil 25.1 zum Spalt 38 zu führen. Die zweiten Fluidpassagen 45.2 sind dazu ausgebildet, das zweite Hüllmaterial 108 vom zweiten Aufnahmeabteil 25.2 zum Spalt 38 zu führen.

Zum Ausbilden der Aufnahmeabteile 25.1, 25.2 weist der Koextrusionskopf 10 einen Einsatz 40 auf, der in der Aufnahmekammer 25 angeordnet ist und derart mit dem Gehäuse 15 und dem Innenrohr 14 zusammenwirkt, dass zwischen dem Einsatz 40, dem Gehäuse 15 und dem Innenrohr 14 das erste Aufnahmeabteil 25.1 und das zweite Aufnahmeabteil 25.2 ausgebildet werden. Die Fluidpassagen 45.1, 45.2 werden durch den Einsatz 40 dabei derart ausgebildet, dass diese fluiddicht voneinander getrennt innerhalb der Aufnahmekammer 25 sind und im Bereich der Düsenöffnung 32 und dort insbesondere im Bereich des Spalts 38 benachbart zueinander münden.

Zwischen dem ersten Aufnahmeabteil 25.1 und dem zweiten Aufnahmeabteil 25.2 ist eine Dichtung 29 angeordnet, welche zum fluiddichten Trennen der zwei benachbarten Aufnahmeabteile 25.1, 25.2 ausgebildet ist. Dabei ist die Dichtung 29 am Einsatz 40 in einer das erste Aufnahmeabteil 25.1 vom zweiten Aufnahmeabteil 25.2 trennenden Wandung angeordnet.

Das erste Aufnahmeabteil 25.1 und das zweite Aufnahmeabteil 25.2 sind symmetrisch, insbesondere rotationssymmetrisch innerhalb der Aufnahmekammer 25 ausgebildet, insbesondere um eine sich in Produktionsrichtung P erstreckende Achse.

Das Gehäuse 15 und der Düsenaufsatz 30 sind bevorzugt in einem Passsitz 43 miteinander verbunden. Das distale Ende 28 des Gehäuses 15 weist dafür eine erste Passfläche 28A auf und der Düsenaufsatz 30 weist innerhalb der Aufnahmeöffnung 31 eine korrespondierende zweite Passfläche 31A auf, die einen Kegelsitz innerhalb des Gehäuses ausbilden. Wie insbesondere in Fig. 3a und 3b ersichtlich, sind das Gehäuse 15 und der Düsenaufsatz 30 dabei über eine Schraubverbindung 33 miteinander verbunden.

Das Innenrohr 14 weist ferner ein distales auslassseitiges Ende 34 auf, wobei die Wandstärke des Innenrohres 14 in Richtung des auslassseitigen Endes 34 - also in Produktionsrichtung P - abnimmt. Wie insbesondere in Fig. 3a und 3b gezeigt, verjüngt sich das Innenrohr 14 dabei in Produktionsrichtung P in einem an dem Düsenaufsatz 30 angrenzenden Bereich. Hüllmaterialien 106, 108 aus der Aufnahmekammer 25 können somit entlang des sich allmählich verjüngenden Innenrohres 14 in Richtung des auslassseitigen Endes 34 entlang fließen. Im Bereich des Innenrohres ist zumindest abschnittsweise ein Strömungskanal 37 mit konstantem Querschnitt vorgesehen. Bevorzugt sind die Aufnahmeabteile 25.1, 25.2 radial außerhalb von dem Bereich des Strömungskanals 37 mit konstantem Querschnitt ausgebildet.

Weiterhin weist der Förderleitungsabschnitt 13 ein einlassseitiges Ende 16 auf, in welchem der Strömungskanal 41 einen vergrößerten Strömungsquerschnitt aufweist. Insbesondere nimmt der Strömungsquerschnitt ausgehend vom einlassseitigen Ende in Produktionsrichtung P ab.

Wie in den Fig. 3a und 3b gezeigt, steht das distale auslassseitige Ende 34 des Innenrohres 14 gegenüber einer Mündungsfläche 36 des Düsenaufsatzes 30 in Produktionsrichtung P vor. Durch das vorstehende auslassseitige Ende 34 kann das erste bzw. zweite Hüllmaterial 106, 108 aus der Aufnahmekammer 25 ungehindert durch einen zwischen Düsenöffnung 32 und Innenrohr 14 ausgebildeten Spalt 38 austreten.

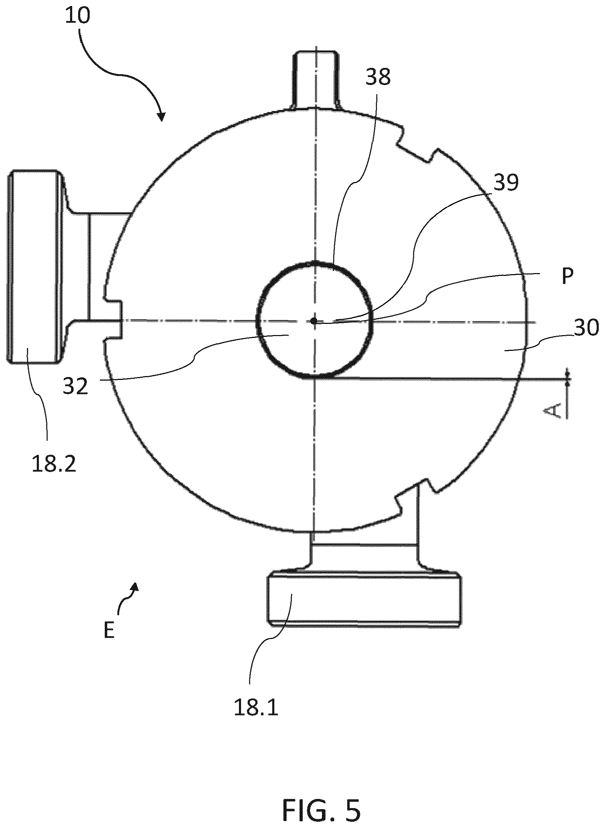

Der Spalt 38 ist in Fig. 5 in einer Ebene E orthogonal zur Produktionsrichtung P gezeigt. Der Spalt 38 erstreckt sich in der gezeigten Ansicht mit einer in der Ebene E gleichförmigen Spaltdicke A um das Füllrohr 14. Wie ferner in der Detaildarstellung gemäß Fig. 3a und 3b ersichtlich, verändert sich die Spaltdicke A in Produktionsrichtung P und nimmt auslassseitig ein Minimum an. Die vergleichsweise größere Spaltdicke A auf Seiten der Aufnahmekammer 25 ermöglicht ein einfaches Einfließen des Hüllmaterials 106, 108 in den Spalt 38. Die Reduzierung der Spaltdicke A bis zum auslassseitigen Minimum ermöglicht das Ausbringen des Hüllmaterials 106, 108 mit einer minimalen Dicke von vorzugsweise 0,1 mm bis 1 mm.

In der gezeigten exemplarischen Ausführungsform ist der Koextrusionskopf 10 zweiteilig ausgebildet. Zur Montage des Koextrusionskopfes 10 wird zunächst der Förderleitungsabschnitt 13 mit dem Innenrohr 14 und dem sich in Produktionsrichtung P erstreckenden und das Innenrohr 14 umgebenden Gehäuse 15 bereitgestellt. Es wird somit der Förderleitungsabschnitt 13 mit dem Gehäuse 15 und dem Innenrohr 14 als ein Bauteil bereitgestellt. Alternativ können das Gehäuse und das Innenrohr auch als separate Bauteile ausgebildet sein. Zwischen der inneren Wandung 27 des Gehäuses 15 und dem Innenrohr 14 wird dann der Einsatz 40 eingesetzt. Anschließend wird bei einem Koextrusionskopf 10 gemäß der gezeigten Ausführungsform ein distales Ende 28 des Gehäuses 15 - also der auslassseitige Endabschnitt - mit dem Düsenaufsatz 30 zum Verschließen der Aufnahmekammer 25 verbunden. Alternativ kann der Düsenaufsatz auch mit dem Gehäuse fest verbunden und an einer anderen Stelle eine Öffnung zum Einsetzten des Einsatzes 40 ausgebildet sein.

Bevorzugt erfolgt die Verbindung über eine form- oder kraftschlüssige Verbindung. In der gezeigten Ausführungsform gemäß der Fig. 2 bis 5 erfolgt die Verbindung durch eine kraftschlüssige Verbindung, nämlich eine Schraubverbindung 33.

In der gezeigten Ausführungsform weisen das Innenrohr 14 sowie die Düsenöffnung 32 einen runden Querschnitt auf. Abweichende Querschnitte sind jedoch auch möglich und im Rahmen der Erfindung vorgesehen.

Fig. 6 zeigt ein mittels der Nahrungsmittelmaschine 1 gemäß Fig. 1 hergestelltes Lebensmittelprodukt 100. Das Lebensmittelprodukt 100 umfasst eine zu einem Strang geformte Lebensmittelmasse 102, welche von einer Hülle 104 umschlossen wird. Die Hülle 104 wird vorliegend aus insgesamt acht räumlich definierten Hüllenabschnitten 104.1, 104.2, 104.3, 104.4, 104.5, 104.6, 104.7, 104.8 gebildet. Vier Hüllenabschnitte 104.1, 104.3, 104.5, 104.7 sind dabei aus einem ersten Hüllmaterial 106 gebildet und vier Hüllenabschnitte 104.2, 104.4, 104.6, 104.8 sind aus einem zweiten Hüllmaterial 108 gebildet. Die vier Hüllenabschnitte 104.1, 104.3, 104.5, 104.7 mit dem ersten Hüllmaterial 106 weisen vorliegend jeweils eine erste Breite B1 auf, welche aufgrund der zylindrischen Form der Lebensmittelmasse 102 durch einen Kreisbogenabschnitt gebildet wird. vier Hüllenabschnitte 104.2, 104.4, 104.6, 104.8 sind aus dem zweiten Hüllmaterial 108 weisen vorliegend jeweils eine zweite Breite B2 auf, welche aufgrund der zylindrischen Form der Lebensmittelmasse 102 ebenfalls durch einen Kreisbogenabschnitt gebildet wird. Bei einem abweichenden Querschnitt der Lebensmittelmasse 102 können die erste Breite B1 und die zweite Breite B2 beispielsweise auch durch eine lineare Strecke definiert sein. Die Aufnahmeabteile 25.1, 25.2 können auch derart ausgebildet sein, dass das erste Hüllmaterial 106 durch die ersten Fluidpassagen 45.1 und das zweite Hüllmaterial 108 durch die zweiten Fluidpassagen 45.2 mit verschiedenen Breiten aufgebracht wird.

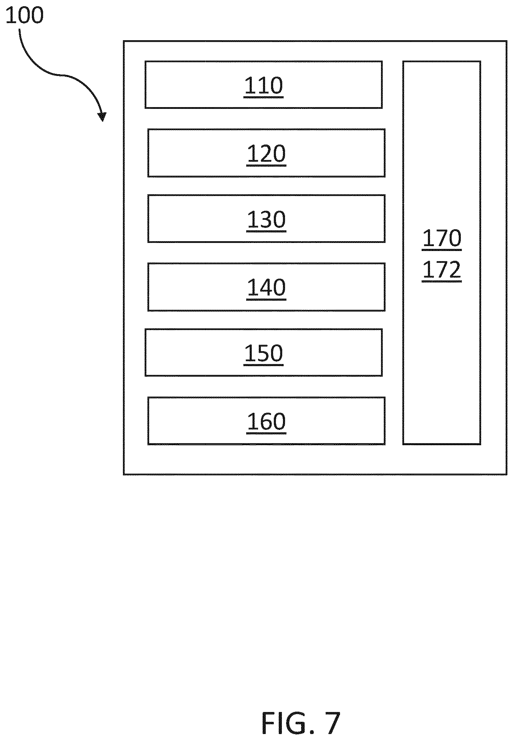

Das Verfahren 100 gemäß Fig. 7 zum Koextrudieren einer Lebensmittelmasse 102 (vgl. Fig. 6) und einer die Lebensmittelmasse 102 (vgl. Fig. 6) umgebenden Hülle 104 (vgl. Fig. 6) aus einer Mehrzahl von Hüllmaterialien, vorliegend einem ersten Hüllmaterial 106 und einem zweiten Hüllmaterial 108 (vgl. Fig. 6) kann bevorzugt auf einer Nahrungsmittelmaschine gemäß Fig. 1 und einem Koextrusionskopf gemäß der Fig. 2 bis 5 ausgeführt werden. Es wird auf die vorstehende Beschreibung Bezug genommen. In einem ersten Schritt 110 umfasst das Verfahren 100 das Führen der zu einem Strang zu formenden Lebensmittelmasse 102 (vgl. Fig. 6) in einer Produktionsrichtung P durch ein Innenrohr 14. In einem zweiten Schritt 120 werden zwei oder mehr verschiedene Hüllmaterial 106, 108 (vgl. Fig. 3a und 3b) in eine Mehrzahl von Aufnahmeabteilen 25.1, 25.2 einer zwischen dem Innenrohr 14 und einem Gehäuse 15 ausgebildeten Aufnahmekammer 25 eingefüllt. Anschließend wird das eingefüllte Hüllmaterial 106, 108 (vgl. Fig. 3a und 3b) in einem dritten Schritt 130 aus den Aufnahmeabteilen 25.1, 25.2 zu einer Düsenöffnung 32 geführt. In einem vierten Schritt 140 wird schließlich ein Strang der Lebensmittelmasse 102 (vgl. Fig. 6) durch ein distales Ende des Innenrohres 14 ausgestoßen und schließlich in einem fünften Schritt 150 Hüllmaterial 106, 108 (vgl. Fig. 3a und 3b) aus den Aufnahmeabteilen 25.1, 25.2 der Aufnahmekammer 25 durch die Düsenöffnung 32 abgegeben. Das Hüllmaterial 106, 108 (vgl. Fig. 3a und 3b) wird dabei derart abgegeben, dass aus jedem der Aufnahmeabteile 25.1, 25.2 Hüllmaterial 106, 108 (vgl. Fig. 3a und 3b) jeweils in einem separaten, vordefinierten Bereich aus der Düsenöffnung 32 austritt und einen definierten Abschnitt 104.1, 104.2, 104.3, 104.4, 104.5, 104.6, 104.7, 104.8 der Hülle 104 (vgl. Fig. 6) ausbildet. Das Hüllmaterial 106, 108 (vgl. Fig. 3a und 3b) vermischt sich dabei nicht bereits in der Aufnahmekammer 25, sondern vorzugsweise erst im Bereich der Düsenöffnung 32, sodass es in einem definierten Bereich auf der zu einem Strang geformten Lebensmittelmasse 102 (vgl. Fig. 6) aufgebracht werden kann.

Vorzugsweise umfasst das Verfahren 100 in einem sechsten Schritt 160 das Verfestigen des durch die Düsenöffnung 32 abgegebenen Hüllmaterials 106, 108 (vgl. Fig. 3a, 3b und 6) durch zumindest eine stromabwärts der Düsenöffnung 32 angeordnete Verfestigungseinrichtung 11. Durch eine solche Verfestigungseinrichtung 11 und ein entsprechendes Verfestigen, welches bevorzugt unmittelbar nach dem Austreten des Hüllmaterials 106, 108 (vgl. Fig. 3a, 3b und 6) aus der Düsenöffnung 32 erfolgt, wird ein Fließen des Hüllmaterials 106, 108 (vgl. Fig. 3a, 3b und 6) entlang des geformten Stranges verhindert. Somit bleiben die beim Austreten des Hüllmaterials 106, 108 (vgl. Fig. 3a, 3b und 6) gebildeten definierten Abschnitte 104.1, 104.2, 104.3, 104.4, 104.5, 104.6, 104.7, 104.8 der Hülle 104 (vgl. Fig. 6) erhalten.

Weiterhin umfasst das Verfahren 100 in einem siebten Schritt 170 bevorzugt das Steuern der Förderleistung der zweiten Förderpumpe 7 und/oder der Förderleistung der dritten Förderpumpe 21 zum Einstellen der Abgabe eines ersten Hüllmaterials 106, 108 (vgl. Fig. 3a, 3b und 6) und/oder eines zweiten Hüllmaterials 106, 108 (vgl. Fig. 3a, 3b und 6) der zwei oder mehr verschiedenen Hüllmaterialien 106, 108 (vgl. Fig. 3a, 3b und 6) durch die Düsenöffnung 32, insbesondere den Spalt 38, derart, dass ein durch das erste Hüllmaterials 106, 108 (vgl. Fig. 3a, 3b und 6) und/oder das zweite Hüllmaterials 106, 108 (vgl. Fig. 3a, 3b und 6) gebildeter Hüllenabschnitt 104.1, 104.2, 104.3, 104.4, 104.5, 104.6, 104.7, 104.8 veränderbar ist. Es soll dabei verstanden werden, dass der siebte Schritt 170 zeitgleich mit den Schritten 110 bis 160 durchgeführt werden kann. Weiter bevorzugt umfasst das Steuern der Förderleistung der zweiten Förderpumpe 7 zum Einstellen der Abgabe des ersten Hüllmaterials 106, 108 (vgl. Fig. 3a, 3b und 6) durch die Düsenöffnung 32 gemäß dem siebten Schritt 170 ferner in Schritt 172 das automatische Anpassen der Förderleistung der dritten Förderpumpe 21 durch die Steuereinrichtung 50.

### Bezugszeichenliste

- 1: Nahrungsmittelmaschine
- 2: erste Füllmaschine
- 3: zweite Füllmaschine
- 4: erste Förderpumpe
- 5: erster Fülltrichter
- 6: erster Auslass
- 7: zweite Förderpumpe
- 8: zweiter Fülltrichter
- 9: zweiter Auslass
- 10: Koextrusionskopf
- 11: Verfestigungseinrichtung
- 12.1: erste Leitung
- 12.2: zweite Leitung
- 13: Förderleitungsabschnitt
- 14: Innenrohr
- 15: Gehäuse
- 16: einlassseitiges Ende
- 18.1: erster Gehäuseeinlass
- 18.2: zweiter Gehäuseeinlass
- 20: dritte Füllmaschine
- 21: dritte Förderpumpe
- 22: dritter Fülltrichter
- 23: dritter Auslass
- 25: Aufnahmekammer
- 25.1: erstes Aufnahmeabteil
- 25.2: zweites Aufnahmeabteil
- 26: Entlüftungsöffnung
- 27: innere Wandung (des Gehäuses)
- 28: distales Ende (des Gehäuses)
- 28A: erste Passfläche (des Gehäuses)
- 30: Düsenaufsatz
- 31: Aufnahmeöffnung
- 31A: zweite Passfläche des Düsenaufsatzes
- 32: Düsenöffnung
- 33: Schraubverbindung
- 34: auslassseitiges Ende
- 36: Mündungsfläche
- 37: Strömungskanal (mit konstantem Strömungsquerschnitt)
- 38: Spalt
- 40: Einsatz
- 41: Strömungskanal (mit vergrößertem Strömungsquerschnitt)
- 43: Passsitz
- 45.1: erste Fluidpassage
- 45.2: zweite Fluidpassage
- 50: Steuereinrichtung
- 100: Lebensmittelprodukt
- 102: Lebensmittelmasse
- 104: Hülle
- 104.1: erster Hüllenabschnitt
- 104.2: zweiter Hüllenabschnitt
- 104.3: dritter Hüllenabschnitt
- 104.4: vierter Hüllenabschnitt
- 106: erstes Hüllmaterial
- 108: zweites Hüllmaterial
- P: Produktionsrichtung
- A: Spaltdicke
- B1: erste Breite
- B2: zweite Breite

## Patentansprüche

1. Koextrusionskopf (10) für eine Nahrungsmittelmaschine (1), insbesondere Koextrusionsmaschine, zum Koextrudieren einer Lebensmittelmasse (102) und einer die Lebensmittelmasse (102) umgebenden Hülle (104), die aus einer Mehrzahl von Hüllenabschnitten (104.1, 104.2, 104.3, 104.4, 104.5, 104.6, 104.7, 104.8) gebildet wird, mit
- einem Innenrohr (14) zur Führung der zu einem Strang zu formenden Lebensmittelmasse (102) in einer Produktionsrichtung (P), wobei ein einlassseitiges Ende (16) des Innenrohres (14) mit einem Auslass (6) einer Füllmaschine (2) verbindbar ist,
- einem das Innenrohr (14) umgebenden Gehäuse (15),
- einer zwischen Innenrohr (14) und Gehäuse (15) ausgebildeten Aufnahmekammer (25) zum Aufnehmen von Hüllmaterial (106, 108) für die den Strang umgebende Hülle (104), und
- einer korrespondierend zum Innenrohr (14) ausgebildeten Düsenöffnung (32) zum Abgeben von Hüllmaterial (106, 108) aus der Aufnahmekammer (25),
wobei die Aufnahmekammer (25) eine Mehrzahl von Aufnahmeabteilen (25.1, 25.2) umfasst, denen jeweils ein Gehäuseeinlass (18.1, 18.2) zum Einlassen von Hüllmaterial (106, 108) in das jeweilige Aufnahmeabteil (25.1, 25.2) zugeordnet ist,
- eine Anzahl von Fluidpassagen (45.1, 45.2), von denen jedem Aufnahmeabteil (25.1, 25.2) eine oder mehrere Fluidpassagen (45.1, 45.2) zugeordnet sind, und wobei die Fluidpassagen (45.1, 45.2) jeweils dazu ausgebildet sind, Hüllmaterial (106, 108) aus dem jeweiligen Aufnahmeabteil (25.1, 25.2) zur Düsenöffnung (32) zu führen,
**dadurch gekennzeichnet, dass** die Fluidpassagen (45.1, 45.2) innerhalb der Düsenöffnung (32) einen Strömungsquerschnitt aufweisen, durch den das innerhalb der jeweiligen Fluidpassage (45.1, 45.2) geförderte Hüllmaterial (106, 108) austritt,
wobei eine Breite, mit der das Hüllmaterial (106, 108) auf die Lebensmittelmasse (102) aufgebracht wird, durch eine Breite des jeweiligen Strömungsquerschnitts definiert ist, wodurch eine Breite des durch das Hüllmaterial (106, 108) gebildeten Hüllenabschnitts (104.1, 104.2, 104.3, 104.4, 104.5, 104.6, 104.7, 104.8) bestimmt ist,
wobei die Fluidpassagen (45.1, 45.2) innerhalb der Aufnahmekammer (25) fluiddicht voneinander getrennt sind und im Bereich der Düsenöffnung (32) benachbart zueinander münden.

2. Koextrusionskopf (10) nach Anspruch 1, ferner umfassend:
- einen in der Aufnahmekammer (25) angeordneten Einsatz (40), der dazu ausgebildet ist, zur Ausbildung der Mehrzahl von Aufnahmeabteilen (25.1, 25.2) und Fluidpassagen (45.1, 45.2) mit dem Gehäuse (15) und/oder dem Innenrohr (14) zusammenzuwirken.

3. Koextrusionskopf (10) nach einem der vorstehenden Ansprüche, ferner umfassend:
- einen Düsenaufsatz (30), der mit dem Gehäuse (15), insbesondere mit einem distalen Ende (28) des Gehäuses (15), verbunden ist und welcher die Düsenöffnung (32) aufweist.

4. Koextrusionskopf (10) nach Anspruch 3,
wobei der Düsenaufsatz (30) mit dem Gehäuse (15) durch eine lösbare form- und/oder kraftschlüssige Verbindung verbunden ist, insbesondere durch mindestens eine der folgenden Verbindungen: eine Clamp-Verbindung, eine Bajonett-Verbindung oder eine Schraubverbindung (33).

5. Koextrusionskopf (10) nach einem der vorstehenden Ansprüche,
wobei das Gehäuse (15) in Produktionsrichtung (P) mit dem auslassseitigen Ende (34) des Innenrohres (14) abschließt, oder das Gehäuse (15) in Produktionsrichtung (P) gegenüber dem auslassseitigen Ende (34) des Innenrohres (14) vorsteht.

6. Koextrusionskopf (10) nach einem der vorstehenden Ansprüche,
wobei die Aufnahmekammer (25) mindestens eine Entlüftungsöffnung (26) aufweist, die zum Entlüften der Aufnahmekammer (25) beim Einfüllen von Hüllmaterial (106, 108) ausgebildet ist.

7. Koextrusionskopf (10) nach Anspruch 6,
wobei zumindest einem der Aufnahmeabteile (25.1, 25.2) eine Entlüftungsöffnung (26) zugeordnet ist, die im montierten Zustand des Koextrusionskopfes (10), insbesondere in vertikaler Richtung, gegenüberliegend des Gehäuseeinlasses (18.1, 18.2) des Aufnahmeabteils (25.1, 25.2) angeordnet ist.

8. Nahrungsmittelmaschine (1), insbesondere Koextrusionsmaschine, zum Herstellen eines Stranges aus einer Lebensmittelmasse (102), mit
- einer ersten Förderpumpe (4) zum Fördern der Lebensmittelmasse (102) und einem ersten Auslass (6) zum Abgeben der Lebensmittelmasse (102),
- einer zweiten Förderpumpe (7) zum Fördern eines ersten Hüllmaterials (106, 108) und einem zweiten Auslass (9) zum Abgeben ersten Hüllmaterials (106, 108),
- mindestens einer dritten Förderpumpe (21) zum Fördern eines zweiten Hüllmaterials (106, 108) und einem dritten Auslass (23) zum Abgeben des zweiten Hüllmaterials (106, 108),
**gekennzeichnet durch** einen mit dem ersten Auslass (6), dem zweiten Auslass (9) und dem dritten Auslass (23) verbundenen Koextrusionskopf (10), der nach einem der vorstehenden Ansprüche ausgebildet ist.

9. Nahrungsmittelmaschine (1) nach Anspruch 8, ferner umfassend:
- mindestens eine Verfestigungseinrichtung (11) zum Verfestigen des auf den Strang aufgebrachten Hüllmaterials (106, 108) aus der Mehrzahl der Aufnahmeabteile (25.1, 25.2).

10. Nahrungsmittelmaschine (1) nach Anspruch 8 oder 9, ferner umfassend:
- eine Steuereinrichtung (50), die signalleitend mit der zweiten Förderpumpe (7) und der dritten Förderpumpe (21) und vorzugsweise der ersten Förderpumpe (4) und/oder der Verfestigungseinrichtung (11) verbunden ist,
wobei die Steuereinrichtung (50) zum Einstellen der Abgabe des Hüllmaterials (106, 108) durch die Düsenöffnung (32) ausgebildet ist, zumindest eine Förderleistung der zweiten Förderpumpe (7) und der dritten Förderpumpe (21) zu steuern.

11. Verfahren (100) zum Koextrudieren einer Lebensmittelmasse (102) und einer die Lebensmittelmasse (102) umgebenden Hülle (104) aus einer Mehrzahl von Hüllmaterialien, mit den Schritten:
- Führen (110) der zu einem Strang zu formenden Lebensmittelmasse (102) in einer Produktionsrichtung (P) durch ein Innenrohr (14),
- Einfüllen (120) von zwei oder mehr verschiedenen Hüllmaterialien (106, 108) in eine Mehrzahl von Aufnahmeabteilen (25.1, 25.2) einer zwischen dem Innenrohr (14) und einem Gehäuse (15) ausgebildeten Aufnahmekammer (25),
- Führen (130) von Hüllmaterial (106, 108) aus den Aufnahmeabteilen (25.1, 25.2) zu einer Düsenöffnung (32) durch eine Anzahl von Fluidpassagen (45.1, 45.2), von denen jedem Aufnahmeabteil (25.1, 25.2) eine oder mehrere Fluidpassagen (45.1, 45.2) zugeordnet sind, wobei die Fluidpassagen (45.1, 45.2) innerhalb der Aufnahmekammer (25) fluiddicht voneinander getrennt sind und im Bereich der Düsenöffnung (32) benachbart zueinander münden,
- Ausstoßen (140) eines Strangs der Lebensmittelmasse (102) durch ein distales Ende (34) des Innenrohres (14), und
- Abgeben (150) von Hüllmaterial (106, 108) aus den Aufnahmeabteilen (25.1, 25.2) der Aufnahmekammer (25) durch die Düsenöffnung (32), derart, dass das Hüllmaterial (106, 108) aus jedem der Aufnahmeabteile (25.1, 25.2) jeweils in einem separaten, vordefinierten Bereich, der durch einen Strömungsquerschnitt der Fluidpassagen (45.1, 45.2) innerhalb der Düsenöffnung (32) gebildet wird, aus der Düsenöffnung (32) austritt und einen definierten Hüllenabschnitt (104.1, 104.2, 104.3, 104.4, 104.5, 104.6, 104.7, 104.8) ausgebildet, wobei eine Breite, mit der das Hüllmaterial (106, 108) auf die Lebensmittelmasse (102) aufgebracht wird, durch eine Breite des jeweiligen Strömungsquerschnitts definiert ist, wodurch eine Breite des durch das Hüllmaterial (106, 108) gebildeten Hüllenabschnitts (104.1, 104.2, 104.3, 104.4, 104.5, 104.6, 104.7, 104.8) bestimmt ist.

12. Verfahren nach Anspruch 11,
ferner umfassend mindestens einen der Schritte:
- Bereitstellen einer Nahrungsmittelmaschine (1) nach Anspruch 11,
- Verfestigen (160) des durch die Düsenöffnung (32) abgegebenen Hüllmaterials (106, 108) durch zumindest eine stromabwärts der Düsenöffnung (32) angeordnete Verfestigungseinrichtung (11);
- Steuern (170) einer Förderleistung der zweiten Förderpumpe (7) und/oder der dritten Förderpumpe (21) zum Einstellen der Abgabe eines ersten Hüllmaterials (106) und/oder eines zweiten Hüllmaterials (108) durch die Düsenöffnung (32), derart, dass ein Hüllenabschnitt (104.1, 104.2, 104.3, 104.4, 104.5, 104.6, 104.7, 104.8) des ersten Hüllmaterials (106) und/oder des zweiten Hüllmaterials (108) veränderbar ist.

13. Verfahren nach Anspruch 12,
wobei das Steuern der Förderleistung der zweiten Förderpumpe (7) zum Einstellen der Abgabe des ersten Hüllmaterials (106) durch die Düsenöffnung (32) ferner das automatische Anpassen (172) der Förderleistung der dritten Förderpumpe (21) durch die Steuereinrichtung (50) umfasst.

## Claims

1. Coextrusion head (10) for a food machine (1), in particular a coextrusion machine, for coextruding a food mass (102) and a casing (104) surrounding the food mass (102), which is formed from a plurality of casing sections (104.1, 104.2, 104.3, 104.4, 104.5, 104.6, 104.7, 104.8), having
- an inner tube (14) for guiding the food mass (102) to be formed into a strand in a production direction (P), wherein an inlet-side end (16) of the inner tube (14) is connectable to an outlet (6) of a filling machine (2),
- a housing (15) surrounding the inner tube (14),
- a receiving chamber (25) formed between the inner tube (14) and the housing (15) for receiving casing material (106, 108) for the casing (104) surrounding the strand, and
- a nozzle opening (32) formed correspondingly to the inner tube (14) for discharging casing material (106, 108) from the receiving chamber (25), wherein the receiving chamber (25) comprises a plurality of receiving compartments (25.1, 25.2), to each of which a housing inlet (18.1, 18.2) for letting casing material (106, 108) into the respective receiving compartment (25.1, 25.2) is assigned,
- a number of fluid passages (45.1, 45.2), of which one or more fluid passages (45.1, 45.2) are assigned to each receiving compartment (25.1, 25.2), and wherein the fluid passages (45.1, 45.2) are each configured to guide casing material (106, 108) from the respective receiving compartment (25.1, 25.2) to the nozzle opening (32),
**characterised in that** the fluid passages (45.1, 45.2) have, within the nozzle opening (32), a flow cross-section through which the casing material (106, 108) conveyed within the respective fluid passage (45.1, 45.2) exits, wherein a width, with which the casing material (106, 108) is applied to the food mass (102), is defined by a width of the respective flow cross-section, whereby a width of the casing section (104.1, 104.2, 104.3, 104.4, 104.5, 104.6, 104.7, 104.8) formed by the casing material (106, 108) is determined,
wherein the fluid passages (45.1, 45.2) are separated from one another in a fluid-tight manner within the receiving chamber (25) and open out adjacent to one another in the region of the nozzle opening (32).

2. Coextrusion head (10) according to claim 1, further comprising:
- an insert (40) arranged in the receiving chamber (25), which is configured to cooperate with the housing (15) and/or the inner tube (14) to form the plurality of receiving compartments (25.1, 25.2) and fluid passages (45.1, 45.2).

3. Coextrusion head (10) according to any one of the preceding claims, further comprising:
- a nozzle attachment (30) which is connected to the housing (15), in particular to a distal end (28) of the housing (15), and which comprises the nozzle opening (32).

4. Coextrusion head (10) according to claim 3,
wherein the nozzle attachment (30) is connected to the housing (15) by a releasable positive-locking and/or force-fit connection, in particular by at least one of the following connections: a clamp connection, a bayonet connection or a screw connection (33).

5. Coextrusion head (10) according to any one of the preceding claims,
wherein the housing (15) terminates flush, in the production direction (P), with the outlet-side end (34) of the inner tube (14), or the housing (15) protrudes, in the production direction (P), beyond the outlet-side end (34) of the inner tube (14).

6. Coextrusion head (10) according to any one of the preceding claims,
wherein the receiving chamber (25) comprises at least one venting opening (26) which is configured to vent the receiving chamber (25) when casing material (106, 108) is being filled in.

7. Coextrusion head (10) according to claim 6,
wherein at least one of the receiving compartments (25.1, 25.2) is assigned a venting opening (26) which, in the mounted state of the coextrusion head (10), in particular in a vertical direction, is arranged opposite the housing inlet (18.1, 18.2) of the receiving compartment (25.1, 25.2).

8. Food machine (1), in particular a coextrusion machine, for producing a strand from a food mass (102), having
- a first conveying pump (4) for conveying the food mass (102) and a first outlet (6) for discharging the food mass (102),
- a second conveying pump (7) for conveying a first casing material (106, 108) and a second outlet (9) for discharging first casing material (106, 108),
- at least one third conveying pump (21) for conveying a second casing material (106, 108) and a third outlet (23) for discharging the second casing material (106, 108),
**characterised by** a coextrusion head (10), connected to the first outlet (6), the second outlet (9) and the third outlet (23), configured according to any one of the preceding claims.

9. Food machine (1) according to claim 8, further comprising:
- at least one solidifying device (11) for solidifying the casing material (106, 108) from the plurality of receiving compartments (25.1, 25.2) applied to the strand.

10. Food machine (1) according to claim 8 or 9, further comprising:
- a control device (50) connected in a signal-conducting manner to the second conveying pump (7) and the third conveying pump (21) and preferably also to the first conveying pump (4) and/or the solidifying device (11),
wherein the control device (50) is configured, for setting the discharge of the casing material (106, 108) through the nozzle opening (32), to control at least a conveying capacity of the second conveying pump (7) and the third conveying pump (21).

11. Method (100) for coextruding a food mass (102) and a casing (104) surrounding the food mass (102) from a plurality of casing materials, comprising the steps of:
- guiding (110) the food mass (102) to be formed into a strand in a production direction (P) through an inner tube (14),
- filling (120) two or more different casing materials (106, 108) into a plurality of receiving compartments (25.1, 25.2) of a receiving chamber (25) formed between the inner tube (14) and a housing (15),
- guiding (130) casing material (106, 108) from the receiving compartments (25.1, 25.2) to a nozzle opening (32) through a number of fluid passages (45.1, 45.2), of which one or more fluid passages (45.1, 45.2) are assigned to each receiving compartment (25.1, 25.2), wherein the fluid passages (45.1, 45.2) are fluidically separated from one another within the receiving chamber (25) and open out adjacent to one another in the region of the nozzle opening (32),
- discharging (140) a strand of the food mass (102) through a distal end (34) of the inner tube (14), and
- discharging (150) casing material (106, 108) from the receiving compartments (25.1, 25.2) of the receiving chamber (25) through the nozzle opening (32), such that the casing material (106, 108) from each of the receiving compartments (25.1, 25.2) exits the nozzle opening (32) in each case in a separate, predefined region, which is formed by a flow cross-section of the fluid passages (45.1, 45.2) within the nozzle opening (32), and forms a defined casing section (104.1, 104.2, 104.3, 104.4, 104.5, 104.6, 104.7, 104.8), wherein a width, with which the casing material (106, 108) is applied to the food mass (102), is defined by a width of the respective flow cross-section, whereby a width of the casing section (104.1, 104.2, 104.3, 104.4, 104.5, 104.6, 104.7, 104.8) formed by the casing material (106, 108) is determined.

12. Method according to claim 11, further comprising at least one of the steps of:
- providing a food machine (1) according to claim 11,
- solidifying (160) the casing material (106, 108) discharged through the nozzle opening (32) by means of at least one solidifying device (11) arranged downstream of the nozzle opening (32);
- controlling (170) a conveying capacity of the second conveying pump (7) and/or the third conveying pump (21) for setting the discharge of a first casing material (106) and/or a second casing material (108) through the nozzle opening (32), such that a casing section (104.1, 104.2, 104.3, 104.4, 104.5, 104.6, 104.7, 104.8) of the first casing material (106) and/or of the second casing material (108) is variable.

13. Method according to claim 12,
wherein the controlling of the conveying capacity of the second conveying pump (7) for setting the discharge of the first casing material (106) through the nozzle opening (32) further comprises the automatic adjustment (172) of the conveying capacity of the third conveying pump (21) by the control device (50).

## Revendications

1. Tête de coextrusion (10) pour une machine alimentaire (1), en particulier une machine de coextrusion, pour coextruder une masse alimentaire (102) et une enveloppe (104), entourant la masse alimentaire (102), qui est formée d'une pluralité de tronçons d'enveloppe (104.1, 104.2, 104.3, 104.4, 104.5, 104.6, 104.7, 104.8), avec
- un tube intérieur (14) pour guider la masse alimentaire (102) à former en un boudin dans une direction de production (P), dans laquelle une extrémité côté entrée (16) du tube intérieur (14) peut être reliée à une sortie (6) d'une machine de remplissage (2),
- un boîtier (15) entourant le tube intérieur (14),
- une chambre de réception (25) réalisée entre le tube intérieur (14) et le boîtier (15) pour recevoir du matériau d'enveloppe (106, 108) pour l'enveloppe (104) entourant le boudin, et
- une ouverture de buse (32) réalisée en correspondance avec le tube intérieur (14) pour distribuer du matériau d'enveloppe (106, 108) à partir de la chambre de réception (25), dans laquelle la chambre de réception (25) comprend une pluralité de compartiments de réception (25.1, 25.2), auxquels est associée respectivement une entrée de boîtier (18.1, 18.2) pour l'admission de matériau d'enveloppe (106, 108) dans le compartiment de réception (25.1, 25.2) respectif,
- un certain nombre de passages de fluide (45.1, 45.2), dont un ou plusieurs passages de fluide (45.1) sont associés à chaque compartiment de réception (25.1, 25.2, 45.2), et dans laquelle les passages de fluide (45.1, 45.2) sont respectivement réalisés pour guider le matériau d'enveloppe (106, 108) à partir du compartiment de réception (25.1, 25.2) respectif vers l'ouverture de buse (32),
**caractérisée en ce que** les passages de fluide (45.1, 45.2) présentent, à l'intérieur de l'ouverture de buse (32), une section d'écoulement par laquelle sort le matériau d'enveloppe (106, 108) acheminé à l'intérieur du passage de fluide (45.1, 45.2) respectif,
dans laquelle une largeur, avec laquelle le matériau d'enveloppe (106, 108) est appliqué sur la masse alimentaire (102), est définie par une largeur de la section d'écoulement respective, par laquelle une largeur du tronçon d'enveloppe (104.1, 104.2, 104.3, 104.4, 104.5, 104.6, 104.7, 104.8), formé par le matériau d'enveloppe (106, 108), est déterminée,
dans laquelle les passages de fluide (45.1, 45.2) sont séparés l'un de l'autre de manière étanche aux fluides à l'intérieur de la chambre de réception (25) et débouchent au voisinage l'un de l'autre dans la zone de l'ouverture de buse (32).

2. Tête de coextrusion (10) selon la revendication 1, comprenant en outre :
- un insert (40) disposé dans la chambre de réception (25), qui est réalisé pour coopérer avec le boîtier (15) et/ou le tube intérieur (14) pour réaliser la pluralité de compartiments de réception (25.1, 25.2) et de passages de fluide (45.1, 45.2).

3. Tête de coextrusion (10) selon l'une quelconque des revendications précédentes, comprenant en outre :
- un embout de buse (30) qui est relié au boîtier (15), en particulier à une extrémité distale (28) du boîtier (15), et qui présente l'ouverture de buse (32).

4. Tête de coextrusion (10) selon la revendication 3,
dans laquelle l'embout de buse (30) est relié au boîtier (15) par une liaison par complémentarité de formes et/ou à force libérable, en particulier par au moins l'une des liaisons suivantes : une liaison de serrage, une liaison à baïonnette ou une liaison vissée (33).

5. Tête de coextrusion (10) selon l'une quelconque des revendications précédentes,
dans laquelle le boîtier (15) se termine, dans la direction de production (P), par l'extrémité côté sortie (34) du tube intérieur (14), ou le boîtier (15) fait saillie dans la direction de production (P) par rapport à l'extrémité côté sortie (34) du tube intérieur (14).

6. Tête de coextrusion (10) selon l'une quelconque des revendications précédentes,
dans laquelle la chambre de réception (25) présente au moins un orifice de ventilation (26) qui est réalisé pour ventiler la chambre de réception (25) lors de l'introduction du matériau d'enveloppe (106, 108).

7. Tête de coextrusion (10) selon la revendication 6,
dans laquelle un orifice de ventilation (26), qui est disposé à l'état monté de la tête de coextrusion (10), en particulier dans la direction verticale, à l'opposé de l'entrée de boîtier (18.1, 18.2) du compartiment de réception (25.1, 25.2), est associé à au moins l'un des compartiments de réception (25.1, 25.2).

8. Machine alimentaire (1), en particulier machine de coextrusion, pour la fabrication d'un boudin à partir d'une masse alimentaire (102), avec
- une première pompe d'alimentation (4) pour acheminer la masse alimentaire (102) et une première sortie (6) pour distribuer la masse alimentaire (102),
- une deuxième pompe d'alimentation (7) pour acheminer un premier matériau d'enveloppe (106, 108) et une deuxième sortie (9) pour distribuer le premier matériau d'enveloppe (106, 108),
- au moins une troisième pompe d'alimentation (21) pour acheminer un second matériau d'enveloppe (106, 108) et une troisième sortie (23) pour distribuer le second matériau d'enveloppe (106, 108),
**caractérisée par** une tête de coextrusion (10) reliée à la première sortie (6), à la deuxième sortie (9) et à la troisième sortie (23), qui est réalisée selon l'une quelconque des revendications précédentes.

9. Machine alimentaire (1) selon la revendication 8, comprenant en outre :
- au moins un dispositif de consolidation (11) pour consolider le matériau d'enveloppe (106, 108) appliqué sur le boudin provenant de la pluralité des compartiments de réception (25.1, 25.2).

10. Machine alimentaire (1) selon la revendication 8 ou 9, comprenant en outre :
- un dispositif de commande (50) qui est relié par conduction de signal à la deuxième pompe d'alimentation (7) et à la troisième pompe d'alimentation (21) et de préférence à la première pompe d'alimentation (4) et/ou au dispositif de consolidation (11),
dans laquelle le dispositif de commande (50) pour régler la distribution du matériau d'enveloppe (106, 108) par l'ouverture de buse (32) est réalisé pour commander au moins un débit de la deuxième pompe d'alimentation (7) et de la troisième pompe d'alimentation (21).

11. Procédé (100) de coextrusion d'une masse alimentaire (102) et d'une enveloppe (104) entourant la masse alimentaire (102) à partir d'une pluralité de matériaux d'enveloppe, avec les étapes :
- de guidage (110) de la masse alimentaire (102) à former en un boudin dans une direction de production (P) à travers un tube intérieur (14),
- d'introduction (120) de deux, ou plus, matériaux d'enveloppe (106, 108) différents dans une pluralité de compartiments de réception (25.1, 25.2) d'une chambre de réception (25) réalisée entre le tube intérieur (14) et un boîtier (15),
- de guidage (130) du matériau d'enveloppe (106, 108) à partir des compartiments de réception (25.1, 25.2) vers une ouverture de buse (32) à travers un certain nombre de passages de fluide (45.1, 45.2), dont un ou plusieurs passages de fluide (45.1, 45.2) sont associés à chaque compartiment de réception (25.1, 25.2), dans lequel les passages de fluide (45.1, 45.2) sont séparés les uns des autres de manière étanche aux fluides à l'intérieur de la chambre de réception (25) et débouchent au voisinage l'un de l'autre dans la zone de l'ouverture de buse (32),
- d'éjection (140) d'un boudin de la masse alimentaire (102) par une extrémité distale (34) du tube intérieur (14), et
- de distribution (150) du matériau d'enveloppe (106, 108) à partir des compartiments de réception (25.1, 25.2) de la chambre de réception (25) par l'ouverture de buse (32), de sorte que le matériau d'enveloppe (106, 108) provenant de chacun des compartiments de réception (25.1, 25.2) respectivement dans une zone distincte, prédéfinie, qui est formée par une section d'écoulement des passages de fluide (45.1, 45.2) à l'intérieur de l'ouverture de buse (32), sorte de l'ouverture de buse (32) et réalise un tronçon d'enveloppe (104.1, 104.2, 104.3, 104.4, 104.5, 104.6, 104.7, 104.8) défini, dans lequel une largeur, avec laquelle le matériau d'enveloppe (106, 108) est appliqué sur la masse alimentaire (102), est définie par une largeur de la section d'écoulement respective, par laquelle une largeur du tronçon d'enveloppe (104.1, 104.2, 104.3, 104.4, 104.5, 104.6, 104.7, 104.8) formé par le matériau d'enveloppe (106, 108) est déterminée.

12. Procédé selon la revendication 11,
comprenant en outre au moins l'une des étapes :
- mise à disposition d'une machine alimentaire (1) selon la revendication 11,
- consolidation (160) du matériau d'enveloppe (106, 108) distribué par l'ouverture de buse (32) par au moins un dispositif de consolidation (11) disposé en aval de l'ouverture de buse (32) ;
- commande (170) d'un débit de la deuxième pompe d'alimentation (7) et/ou de la troisième pompe d'alimentation (21) pour régler la distribution d'un premier matériau d'enveloppe (106) et/ou d'un second matériau d'enveloppe (108) par l'ouverture de buse (32), de sorte qu'un tronçon d'enveloppe (104.1, 104.2, 104.3, 104.4, 104.5, 104.6, 104.7, 104.8) du premier matériau d'enveloppe (106) et/ou du second matériau d'enveloppe (108) puisse être modifié.

13. Procédé selon la revendication 12,
dans lequel la commande du débit de la deuxième pompe d'alimentation (7) pour régler la distribution du premier matériau d'enveloppe (106) par l'ouverture de buse (32) comprend en outre l'ajustement automatique (172) du débit de la troisième pompe d'alimentation (21) par le dispositif de commande (50).
